# EUROPEAN PATENT SPECIFICATION

(11) **EP 0 850 760 B1**
(45) Date of publication and mention of the grant of the patent: **01.08.2001**
(21) Application number: 97115722.7
(22) Date of filing: 10.09.1997
(51) Int. Cl.: B41F 9/00

(54) **Electrostatic assist system**
Elektrostatische Druckhilfe
Dispositif auxiliaire électrostatique de l'impression

(30) Priority: 11.10.1996 JP 28927596; 25.10.1996 JP 30129096
(43) Date of publication of application: 01.07.1998
(73) Proprietor: SHINKO CO., LTD., Osaka (JP)
(72) Inventor: Trimborn, Christian Wolfgang, Minamiokajima, Taisho-ku Osaka (JP); Nakauchi, Masayoshi, Minamiokajima, Taisho-ku Osaka (JP)
(74) Representative: von Fischern, Bernhard, Dipl.-Ing.

(56) References cited:
- US-A- 5 243 487

## Description

This invention relates to an electrostatic assist system.

In an electrostatic assist system arranged to transfer ink utilizing static electricity, an impression roller for pressing a strip-shaped paper against a metal printing cylinder is charged by a static electrode, this causes the paper to stick to the printing cylinder and ink in a printing cylinder cell (a depression on a surface of the printing cylinder) to rise against the cell, and the ink is thereby smoothly transferred to the paper. In such an electrostatic assist system, it is necessary to avoid serious accidents such as a fire caused by occurrence of a spark (spark discharge) due to a rise or a fall of potential of the impression roller or contamination of an electrode.

A conventional electrostatic assist system detects behavior of an electric current flowing at an electrode such as the static electrode through calculation such as simple differentiation of alternating current components, differentiation and integration, or frequency selection (resonance) ignoring direct current components. Such a conventional system is eg shown in document US-A-5 243 487.

In detecting a spark from alternating current components as described above, a spike noise caused by switching on the power supply resembles alternating current components of a spark generated from an alternating current generating portion or an electrode, and this causes a malfunction.

It is therefore an object of the present invention to provide an electrostatic assist system wherein the foregoing problems are solved, a malfunction caused by a noise except a spark is prevented, and accidents such as a fire is prevented by accurately detecting only a spark.

These objects are solved according to the present invention by electrostatic assist system including the features of claim 1. Furthermore detailed embodiment is described in the dependent claim 2.

The present invention will be described with reference to the accompanying drawings, in which:
Figure 1 is a basic block diagram of an embodiment of an electrostatic assist system;
Figure 2 is a partial schematic view;
Figure 3 is a circuit diagram of a device for detecting spark;
Figure 4A is a graphical representation of a current signal sent to the device for detecting spark at generation of a spark;
Figure 4B is a graphical representation of an envelope signal at generation of a spark;
Figure 4C is a graphical representation of a signal level difference at generation of a spark;
Figure 4D is a graphical representation of a flip-flop at generation of a spark;
Figure 5A is a graphical representation of a current signal sent to the device for detecting spark at generation of a spike noise;
Figure 5B is a graphical representation of an envelope signal at generation of a spike noise;
Figure 5C is a graphical representation of a signal level difference at generation of a spike noise;
Figure 5D is a graphical representation of a flip-flop at generation of a spike noise;
Figure 6A is a graphical representation of a current signal sent to the device for detecting spark at initial operation of a device for generating high voltage;
Figure 6B is a graphical representation of an envelope signal at initial operation of the device for generating high voltage;
Figure 6C is a graphical representation of a signal level difference at initial operation of the device for generating high voltage;
Figure 6D is a graphical representation of a flip-flop at initial operation of the device for generating high voltage;
Figure 7 is a schematic illustration of a whole portion;
Figure 8 is a schematic illustration of a printing portion;
Figure 9 is a block diagram showing a power-supply unit section; and
Figure 10 is a block diagram showing a controlling device section.

Preferred embodiments of the present invention will now be described with reference to the accompanying drawings.

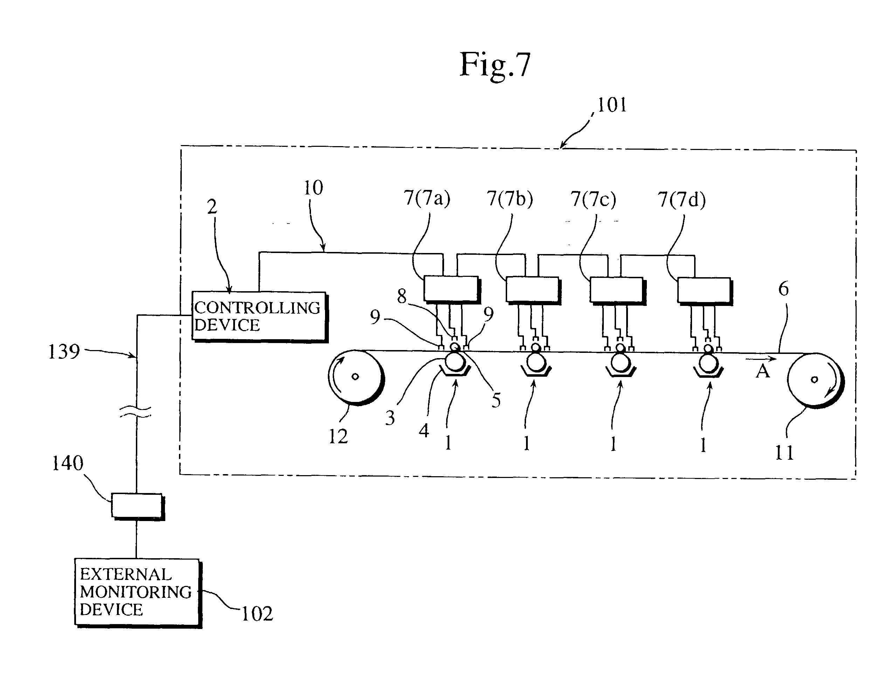

In Figure 7, 101 is an electrostatic assist system installed in an office of a printer, and 102 is an external monitoring device installed in an office of a manufacturer of the electrostatic assist system 101. The electrostatic assist system 101 is provided with plural (four in the illustration) printing portions 1 and a controlling device 2 for controlling printing of each printing portion 1.

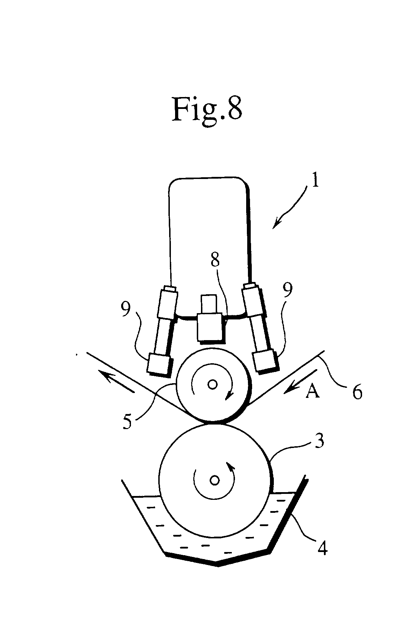

As shown in Figure 7 and Figure 8, each printing portion 1 is provided with a printing cylinder 3, an ink bath 4, an impression roller 5 for pressing a substrate 6 against the printing cylinder 3, a charge unit 8, discharge units 9, and power-supply units 7 electrically connected with the charge unit 8 and the discharge units 9.

A depression (a printing cylinder cell) corresponding to a figure to be printed is arranged on an outer circumferential face of the printing cylinder 3, and the depression is supplied with ink from the ink bath 4. The substrate 6 is sent from a guiding roller 11 to a winding roller 12 in a direction of an arrow A and travels between the impression roller 5 and the printing cylinder 3.

The charge unit 8 possesses an electrode (a static electrode) described below, and negatively charges ink kept in the depression of the printing cylinder 3 through the impression roller 5 and the substrate 6 (in this case, a strip-shaped paper). Ink molecules are thereby charged negatively and repel each other. The ink is attracted toward the substrate 6 and is transferred to the substrate 6. The discharge units 9 arranged at an upstream side and a downstream side of the impression roller 5 possess electrodes (ionizer electrodes) described below, and rectify potential of the substrate 6 so that the ink of the printing cylinder 3 is accurately charged.

A total of four power-supply units 7a, 7b, 7c, and 7d of the printing portions 1 are connected with the controlling means 2 through a serial communication circuit 10. The ink baths 4 of the printing portions 1 contain ink of different colors (for example, red, blue, yellow, and black) respectively. Each power-supply unit 7a, 7b, 7c, 7d is independently controlled by a command signal from the controlling means 2 and printing is conducted. A standard for the serial communication circuit 10 is, for example, RS485 of USEIA (US Electronic Industries Association). In case of using this RS485, it is possible to connect at most 10 power-supply units 7 to the controlling means 2 through one serial communication circuit 10, and this lowers costs for constructing the transmission line.

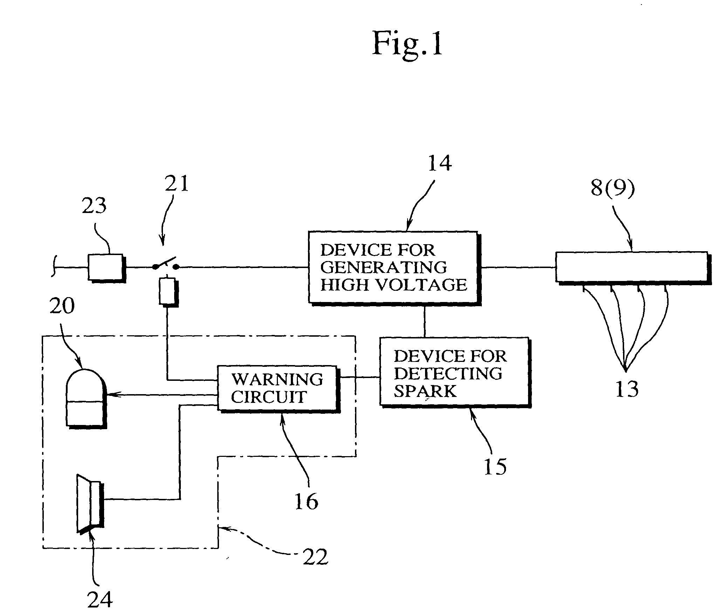

As shown in Figure 1, this electrostatic assist system is provided with a charge unit 8 having electrodes 13 (static electrodes), a device 14 for generating high voltage that impresses high voltage on the electrodes 13 of the charge unit 8, a device 15 for detecting spark that detects generation of a spark (abnormal discharge) from an electric current flowing at the electrodes 13 of the charge unit 8, a warning device 22 for warning upon receipt of a spark detection signal outputted from the means 15 for detecting spark, an interlock circuit 21, and a primary source 23. The warning means 22 possesses a buzzer 24, a lamp 20, and a warning circuit 16 for operating the buzzer 24 and the lamp 20 on receipt of a command signal from the means 15 for detecting spark.

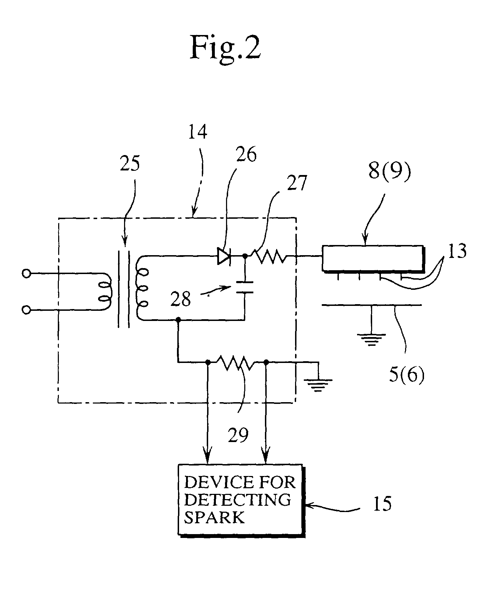

As shown in Figure 2, the means 14 for generating high voltage is provided with a transformer 25 for generating high voltage, a rectifying circuit comprising a rectifying device 26, a first resistor 27, and a condenser 28, and a second resistor 29 for bringing in an electric current connected to the rectifying circuit. The first resistor 27 at an end side of the transformer 25 is electrically connected with the charge unit 8 (electrodes 13), and the impression roller 5 facing the electrodes 13 is in ground connection with a mechanical frame through the printing cylinder 3 (not illustrated). Both end portions of the second resistor 29 are electrically connected with the means 15 for detecting spark.

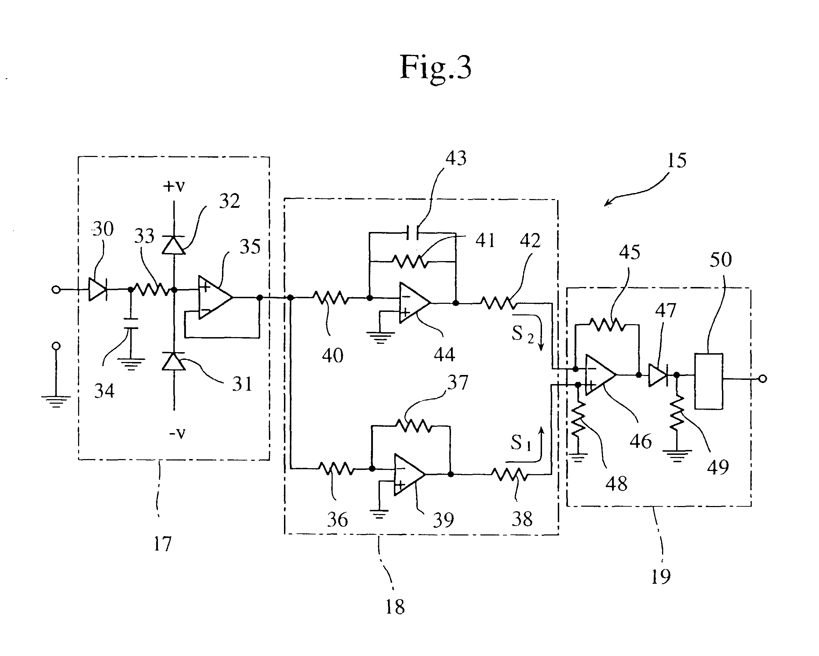

As shown in Figure 3, the means 15 for detecting spark comprises a device 17 for detecting an envelope of direct current components, a preparatory device 18 for comparing signals which separates and outputs an envelope signal outputted from the means 17 for detecting envelope into a first signal S₁ with a phase as it is and a second signal S₂ with a phase later than the phase of the first signal S₁ , and a device 19 for comparing signals which calculates a signal level difference between the first signal S₁ and the second signal S₂ outputted from the preparatory means 18 for comparing signals and outputs a spark detection signal when the signal level difference is at least a predetermined value for at least a predetermined time.

The means 17 for detecting envelope possesses diodes 30, 31, 32, a resistor 33, a condenser 34, and an operational amplifier 35. The preparatory means 18 for comparing signals possesses resistors 36, 37, 38 for outputting the first signal S₁ , an operational amplifier 39 in parallel connection with the resistor 37, resistors 40, 41, 42 for outputting the second signal S₂ , and a condenser 43 and an operational amplifier 44 in parallel connection with the resistor 41. The means 19 for comparing signals possesses an operational amplifier 46, a resistor 45 in parallel connection with the operational amplifier 46, a diode 47 in series connection with the operational amplifier 46, a resistor 48 an end of which is connected to a plus terminal side of the operational amplifier 46, a flip-flop 50 in series connection with the diode 47, and a resistor 49 an end of which is connected between the diode 47 and the flip-flop 50.

Going back to Figure 2, the discharge unit 9 possesses electrodes 13 (ionizer electrodes) for discharge, and is connected to the means 14 for generating high voltage as well as in the case of the charge unit 8. The substrate 6 is in ground connection. The discharge unit 9 is connected to a means 14 for generating high voltage and a means 15 for detecting spark, and the charge unit 8 is connected to another means 14 for generating high voltage and another means 15 for detecting spark.

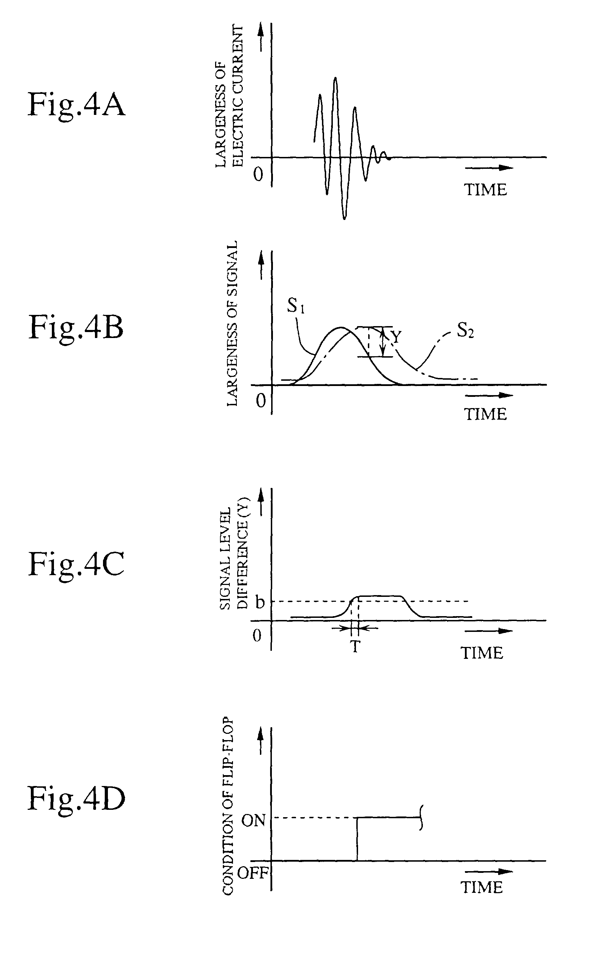

Operation of the means 15 for detecting spark is going to be explained below. As shown in Figure 1, the means 15 for detecting spark monitors an electric current flowing at the electrodes 13 through the means 14 for generating high voltage. When a spark is generated at an electrode 13, a (alternating) current signal sent to the means 15 for detecting spark changes abruptly in largeness of the signal in a short period as shown in Figure 4A. The means 17 for detecting envelope shown in Figure 3 detects an envelope of direct current components of said current signal.

An envelope signal outputted from the means 17 for detecting envelope is separated into a first signal S₁ with a phase as it is and a second signal S₂ with a phase later than the phase of the first signal S₁. In other words, there is a time lag between the phase of the first signal S₁ and the phase of the second signal S₂ as shown in Figure 4B.

Next, the first signal S₁ and the second signal S₂ are sent to the means 19 for comparing signals which calculates a signal level difference Y between the first signal S₁ and the second signal S₂. That is to say, the first signal S₁ is subtracted from the second signal S₂ . When the signal level difference Y is at least a predetermined value b for at least a predetermined time T as shown in Figure 4C, a function signal is sent to the flip-flop 50 of the means 19 for comparing signals shown in Figure 3. The flip-flop 50 is turned on as shown in Figure 4D, and is kept being turned on. A signal informing this situation of being turned on is sent from the means 15 for detecting spark shown in Figure 1 to the warning means 22, and warning is generated.

The predetermined value b and the predetermined time T are determined through experiments. The means 19 for comparing signals is arranged so that a function signal is sent to the flip-flop 50 and the flip-flop 50 is turned on when the signal level difference Y between the first signal S₁ and the second signal S₂ continues to be at least the predetermined value b for at least the predetermined time T. After the flip-flop 50 is turned on, the flip-flop 50 is turned off by sending a reset signal through a reset circuit (not illustrated).

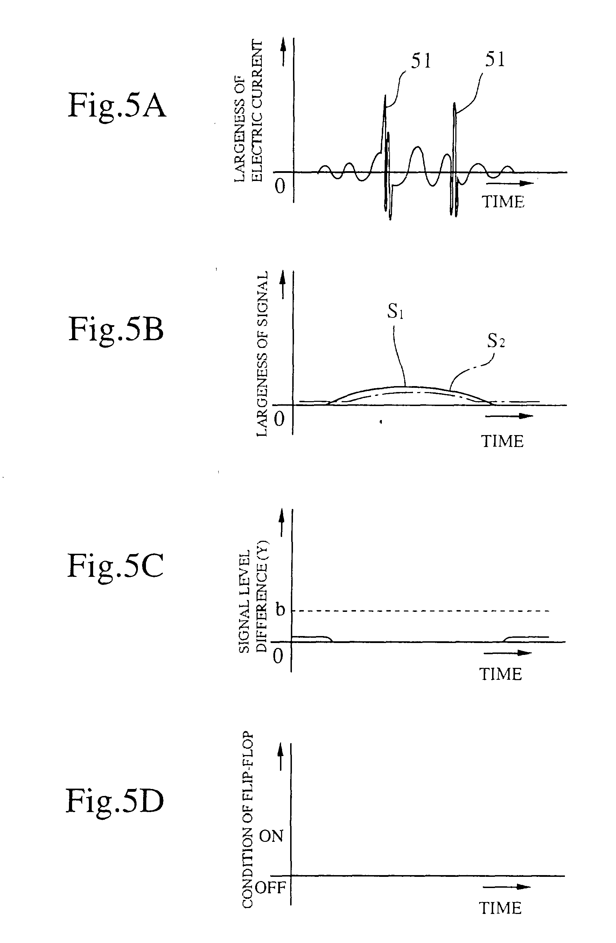

Next, when a high level noise without durability such as a spike noise of a power-supply occurs, a current signal sent to the means 15 for detecting spark partly includes high level noises 51 as shown in Figure 5A. An envelope detected by the means 17 for detecting envelope shown in Figure 3 forms a gentle mountain, and is separated into a first signal S₁ with a phase as it is and a second signal S₂ with a phase later than the phase of the first signal S₁ by the preparatory means 18 for comparing signals as shown in Figure 5B.

The means 19 for comparing signals calculates a level difference between the first signal S₁ and the second signal S₂ . The signal level difference Y is, as shown in Figure 5C, smaller than the predetermined value b, therefore a function signal is not sent to the flip-flop 50 of the means 19 for comparing signals shown in Figure 3, and the flip-flop 50 remains being turned off as shown in Figure 5D. As a result, warning is not generated.

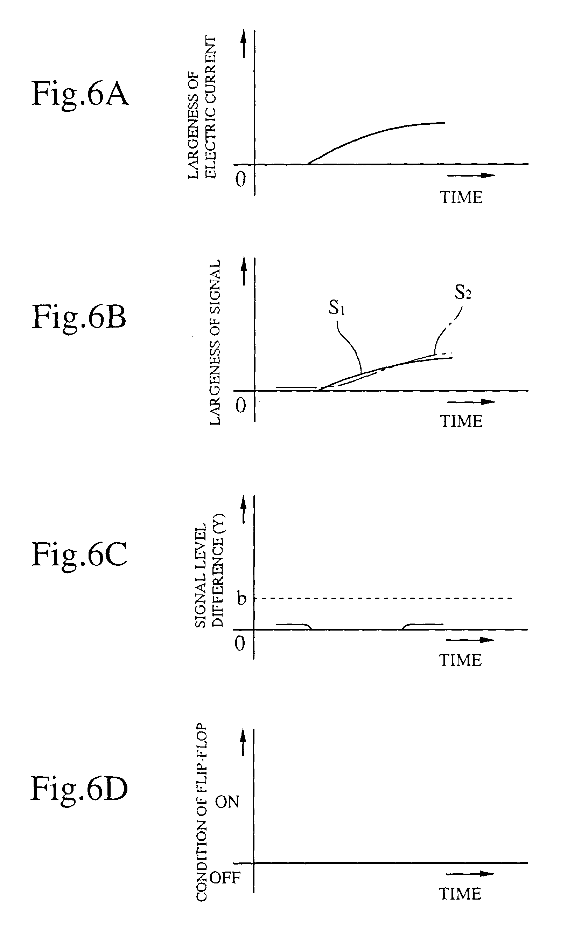

Next, the means 14 for generating high voltage starts softly at initial operation due to preliminary arrangement of the circuit, and a current signal sent to the means 15 for detecting spark increases gently as shown in Figure 6A. An envelope detected by the means 17 for detecting envelope shown in Figure 3 is separated into a first signal S ₁ with a phase as it is and a second signal S₂ by the preparatory means 18 for comparing signals as shown in Figure 6B.

The means 19 for comparing signals calculates a signal level difference Y between the first signal S₁ and the second signal S₂ . The signal level difference Y is, as shown in Figure 6C, smaller than the predetermined value b, therefore a function signal is not sent to the flip-flop 50 of the means 19 for comparing signals shown in Figure 3, and the flip-flop 50 remains being turned off as shown in Figure 6D. As a result, warning is not generated.

According to the electrostatic assist system described above, generation of a spark at electrodes 13 such as static electrodes and ionizer electrodes is accurately detected, and it is possible to accurately and swiftly detect only generation of a spark preventing a malfunction caused by noises except a spark. This prevents serious accidents such as a fire.

It is also preferable to arrange the power-supply to be cut immediately after generation of a spark. The electrodes 13 can be electrodes for corona surface treatment instead of the foregoing static electrodes of the charge unit 8 and ionizer electrodes of the discharge unit 9.

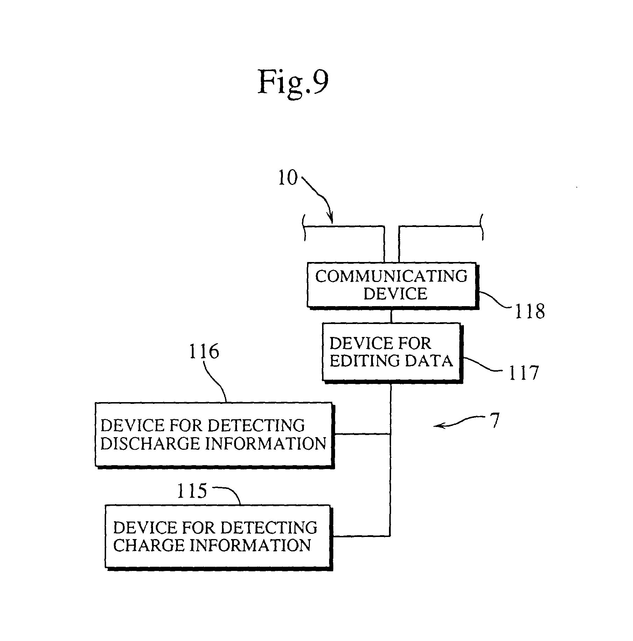

Next, as shown in Figure 9, a power-supply unit 7 is provided with a charge information detecting device 115 which detects various information concerning a static electrode (a charge unit) such as contamination of the static electrode, generation of a spark, or abnormal working, a discharge information detecting device 116 which detects various information concerning an ionizer electrode (a discharge unit) such as contamination of the ionizer electrode, generation of a spark, or abnormal working, a device (means) 117 for editing data detected by the charge (discharge) information detecting means 115, 116, and a communicating device (communicating means) 118 for sending the edited data to the controlling means 2.

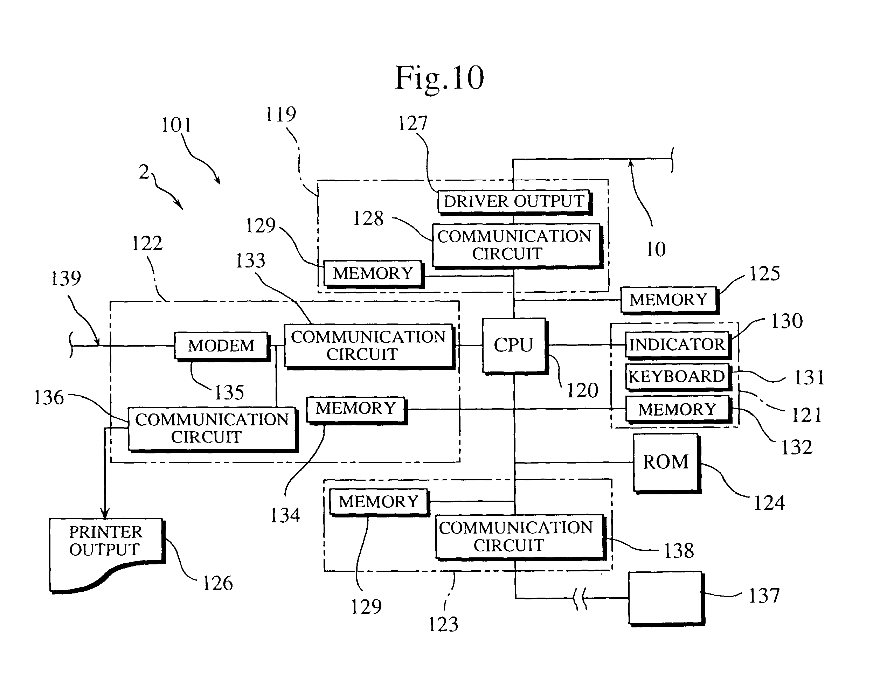

As shown in Figure 10, the controlling means 2 is provided with an internal communicating device 119, a memory 125 for memorizing monitoring data, a central processing unit 120 (CPU), an inputting and indicating device 121, an external communicating device 122, a device 123 for transmitting control instruction data, a storage media 124 (ROM) where a controlling program is recorded, and a printer output 126.

The internal communicating means 119 of the controlling means 2 possesses a driver output 127 for serial communication, a communication circuit 128 for serial communication, and a memory 129 for editing data sent from power-supply units 7 (not illustrated). The inputting and indicating means 121 possesses an indicator 130, a keyboard 131, and a memory 132. The external communicating means 122 is provided with a communication circuit 133 for external communication, a memory 134, a modem 135, and a parallel communication circuit 136 for printer output. The means 123 for transmitting control instruction data possesses a communication circuit 138 for sending data to a control indicating device 137 and a memory 129. The control indicating means 137 indicates conditions of an electrostatic assist system 101 at a locale where the system 101 is installed.

The modem 135 of the external communicating means 122 is connected to an external communication circuit 139. The external communication circuit 139 is a line, for example, a public telephone line. As shown in Figure 7, a modem 140 is connected to the external monitoring means 102, and the modem 140 is connected to the external communication circuit 139. That is to say, the electrostatic assist system 101 and the external monitoring means 102 are connected through the modems 135, 140 and the external communication circuit 139. It is possible to use either of an analog line or a digital line as the external communication circuit 139, and when a digital line is used as the circuit 139, a connecting device for digital line is used instead of the modem 135, 140.

In a method for monitoring an electrostatic assist system according to the present invention, check item data for judging conditions of the electrostatic assist system 101 is edited at the electrostatic assist system 101 side, the edited check item data is transmitted to the external monitoring means 102 through the modems 135, 140 and the external communication circuit 139, and the external monitoring means 102 memorizes and indicates the check item data.

In a detailed explanation, the check item data is edited at the electrostatic assist system 101 side in sequence of time (when the data was detected). In further detailed explanation, the check item data is edited at the electrostatic assist system 101 side at regular time intervals. The time interval is preferably three to ten minutes, and it is possible to arrange the time interval to be above that range. The check item data is edited at the electrostatic assist system 101 side also when an accident occurs in the electrostatic assist system 101.

In concrete terms, each power-supply unit 7a, 7b, 7c, 7d is given a specific address beforehand, and is reset when power is supplied. The controlling means 2 sends transmission request successively from the power-supply unit 7a to the power-supply unit 7d. A signal of the transmission request includes the foregoing address, and a Dower-supply unit 7 that corresponds to the address responds to the signal and the check item data is sent to the controlling means 2, which edits and memorizes data on all of the power-supply units 7a, 7b, 7c, and 7d.

The check item data herein described is data which is necessary for diagnosis of conditions of the electrostatic assist system 101. In other words, the check item data includes both of data for forecasting a part of the electrostatic assist system 101 where a trouble or an accident might occur and data for diagnosis of cause of a trouble and a method for repair when a trouble or an accident occurs in the electrostatic assist system 101.

The check item data comprises a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, a static electrode spark generation signal, a charged interlock right/wrong signal, a static electrode predetermined voltage supply right/wrong signal, a static electrode primary source on/off signal, a static electrode contamination signal, a charged current signal, a static electrode impressed voltage signal, a static electrode impressed voltage set value signal, and a communication error signal. Moreover, the check item data includes detection time of the data.

The power-supply module overheat signal warns when a power-supply module has a temperature higher than a certain temperature which causes a trouble or an accident. The ionizer electrode contamination signal includes an ionizer electrode contamination error signal and an ionizer electrode contamination detection signal. The ionizer electrode contamination detection signal informs that contamination of the ionizer electrode is beyond a certain limit (a predetermined limit), and the ionizer electrode contamination error signal informs that contamination of the ionizer electrode is further increased and it is necessary to immediately clean or exchange the ionizer electrode. The ionizer electrode spark generation signal informs generation of a spark at the ionizer electrode, and is detected by the means 15 for detecting spark.

The ionizer electrode impressed voltage falling/rising/abnormal signal informs that an impressed voltage of the ionizer electrode is above a normal voltage, below the normal voltage, or abnormal. The discharged interlock right/wrong signal informs whether an interlock of the ionizer electrode works normally or not. The ionizer electrode predetermined voltage supply right/wrong signal informs whether a predetermined voltage (for example, +300V) is normally sent from a direct current power-supply of a high voltage generating circuit or not. The ionizer electrode primary source on/off signal informs whether on-off of a primary source of the ionizer electrode is operated normally or not.

The static electrode spark generation signal informs generation of a spark at the static electrode, and is detected by the means 15 for detecting spark.

The charged interlock right/wrong signal informs whether an interlock of the static electrode works normally or not. The static electrode predetermined voltage supply right/wrong signal informs whether a predetermined voltage (for example, +300V) is normally sent from a direct current power-supply of a high voltage generating circuit or not. The static electrode primary source on/off signal informs whether on-off of a primary source of the static electrode is operated normally or not.

The static electrode contamination signal informs that contamination of the static electrode is above a certain limit (a predetermined limit), and that it is necessary to immediately clean or exchange the static electrode when the contamination is further increased. The charged current signal informs whether a value of a charged current is normal or not. The static electrode impressed voltage signal informs whether an impressed voltage of the static electrode is normal or not. The static electrode impressed voltage set value signal informs whether a set value of the impressed voltage of the static electrode is normal or not. The communication error signal informs whether communication between the controlling means 2 and the power-supply units 7 is normal or not.

The check item data includes operating time of the electrostatic assist system 101. The operating time is edited as data of times including the year, month, day, hour, and minute when the electrostatic assist system 101 started and halted. The time preferably includes the second if necessary.

The check item data edited and memorized by the controlling means 2 is transmitted to the external monitoring means 102 through the modems 135, 140 and the external communication circuit 139. The external monitoring means 102 is installed in an office of a manufacturer of the electrostatic assist system 101. The external monitoring means 102 in the office memorizes and indicates the check item data. This enables a staff of the manufacturer in the office of the manufacturer to examine conditions of the electrostatic assist system 101 installed in an office of a printer.

If a trouble occurs and the trouble can be repaired by a staff of the printer, the manufacturer's staff instructs the printer's staff a method to repair the system by telephone, facsimile, or personal computer communication. If the trouble requires a staff of the manufacturer or exchange of parts, an expert staff of the manufacturer goes to the printer's office with necessary tools and parts. Time required for restoration of the electrostatic assist system 101 is extremely shortened in comparison with a conventional case.

If an expert staff of the manufacturer examines the check item data and judges that the electrostatic assist system 101 will have a trouble with high possibility, occurrence of a trouble can be prevented beforehand by informing the details to the printer's side by telephone, facsimile, or personal computer communication.

As described above, owing to cooperation of a staff of the printer and an expert staff of the manufacturer, it is possible to prevent a trouble and repair the electrostatic assist system 101, and maintainability (safety) is increased. It is therefore possible to shorten a time for which printing operation is ceased, and an appointed date of delivery of printed matters can be fulfilled more strictly in comparison with a conventional system.

The electrostatic assist system of the present invention provides the following effects.

It is possible to prevent a malfunction caused by a noise excluding a spark and accurately and swiftly detect only generation of a spark at an electrode 13. This prevents serious accidents such as a fire and wasteful halt of the electrostatic assist system caused by a malfunction.

Warning is generated immediately after generation of a spark, and this enables dealing with an accident swiftly and increasing safety.

While preferred embodiments of the present invention have been described in this specification, it is to be understood that the invention is illustrative and not restrictive, because various changes are possible within the scope of the appended claims.

## Claims

1. An electrostatic assist system comprising means (15) for detecting spark provided with means (17) for detecting an envelope of direct current components of an electric current flowing at electrodes (13) where high voltage is impressed, preparatory means (18) for comparing signals which separates and outputs an envelope signal outputted from said means (17) for detecting envelope into a first signal (S₁) with a phase as it is and a second signal (S₂ ) with a phase later than the phase of the first signal (S₁) , and means (19) for comparing signals which calculates a signal level difference (Y) between the first signal (S ₁ ) and the second signal (S₂ ) and outputs a spark detection signal when the signal level difference (Y) is at least a predetermined value (b) for at least a predetermined time (T).

2. The electrostatic assist system as set forth in claim 1 characterized in that it comprises warning means (22) which warns on receiving a spark detection signal outputted from the means (19) for comparing signals of the means (15) for detecting spark.

## Patentansprüche

1. Elektrostatisches Hilfssystem, das eine Einrichtung (15) zum Erfassen eines Funkens aufweist, die mit einer Einrichtung (17) zum Erfassen einer Hüllkurve von Gleichstromkomponenten eines elektrischen Stroms versehen ist, der bei Elektroden (13) fließt, wo eine hohe Spannung eingeprägt ist, eine Vorbereitungseinrichtung (18) zum Vergleichen von Signalen, die ein von der Einrichtung (17) zum Erfassen einer Hüllkurve ausgegebenes Hüllkurvensignal in ein erstes Signal (S₁) mit einer Phase, wie sie ist, und ein zweites Signal (S₂) mit einer Phase, die später als die Phase des ersten Signals (S₁) ist, trennt und ausgibt, und eine Einrichtung (19) zum Vergleichen von Signalen, die eine Signalpegeldifferenz (Y) zwischen dem ersten Signal (S₁) und dem zweiten Signal (S₂) berechnet und ein Funkenerfassungssignal ausgibt, wenn die Signalpegeldifferenz (Y) wenigstens ein vorbestimmter Wert (b) für wenigstens eine vorbestimmte Zeit (T) ist.

2. Elektrostatisches Hilfssystem nach Anspruch 1, dadurch gekennzeichnet, daß es eine Warneinrichtung (22) aufweist, die beim Empfangen eines von der Einrichtung (19) zum Vergleichen von Signalen der Einrichtung (15) zum Erfassen eines Funkens ausgegebenen Funkenerfassungssignals warnt.

## Revendications

1. Système électrostatique d'aide comprenant un moyen (15) de détection d'une étincelle, pourvu d'un moyen (17) de détection d'une enveloppe de composants direct de courant d'un courant électrique circulant au niveau d'électrodes (13) où une tension élevée est appliquée, un moyen de préparation (18) destiné à comparer des signaux qui séparent et sortent un signal d'enveloppe sortie dudit moyen (17) pour détecter l'enveloppe dans un premier signal (S1) ayant une phase telle qu'elle est et un second signal (S2), ayant une phase plus tard que la phase du premier signal (S1), et un moyen (19) de comparaison des signaux, lequel calcule une différence de niveau de signal (Y) entre le premier signal (S1) et le second signal (S2) et sort un signal de détection d'étincelle lorsque la différence de niveau de signal (Y) est au moins égal à une valeur prédéterminée (b) pendant au moins un temps prédéterminé (T).

2. Système électrostatique d'aide selon la revendication 1, caractérisé en ce qu'il comprend un moyen d'avertissement (22) qui avertit de la réception d'un signal de détection d'étincelle sorti du moyen (19) pour comparer les signaux du moyen (15) destiné à la détection d'une étincelle.
